# DEMANDE DE BREVET EUROPEEN

(11) **EP 1 713 041 A1**
(43) Date de publication de la demande: **18.10.2006**
(21) Numéro de dépôt: 05290807.6
(22) Date de dépôt: 12.04.2005
(51) Int. Cl.: G07G 1/14, G07F 19/00

(54) **Système de paiement par carte bancaire**

(71) Demandeur: Axalto SA, 92120 Montrouge (FR)
(72) Inventeur: Mengus, Jean-Paul, c/o Axalto SA, 92120 Montrouge (FR)
(74) Mandataire: Cour, Pierre

(57) **Abrégé**

L'invention propose un système de terminaux de paiement adapté pour les petits commerces devant disposer d'un petit nombre de terminaux de paiement. Le système de paiement par carte bancaire comporte un réseau privé d'échange de données 20, au moins deux terminaux de paiement identiques POS1 à POS4 et une passerelle de communication 21. Chaque terminal dispose d'une interface de communication 18 pour se connecter audit réseau 20. La passerelle de communication 21 est connectée audit réseau privé 20 et à une ligne de communication 30 pour communiquer avec un serveur bancaire 31 distant.

## Description

L'invention se rapporte aux systèmes de paiement par carte bancaire. Plus particulièrement, l'invention se rapporte aux systèmes de paiement disposant de plusieurs terminaux de paiement.

De nos jours, les cartes bancaires constituent un moyen de paiement courant. Les cartes bancaires disposent d'une piste magnétique et/ou d'une puce électronique pour mémoriser des informations accessibles par l'intermédiaire d'un terminal de paiement. Suivant le type de carte de paiement, le terminal peut effectuer différentes opérations. Pour tous les types de cartes, le terminal peut lire des informations d'identification de la carte afin de les comparer à une liste noire de cartes invalidées et/ou éventuellement rentrer en communication avec un serveur bancaire pour autoriser te paiement. Il peut être possible de vérifier également le montant de crédit restant sur la carte. Une communication entre le terminal de paiement et le serveur bancaire peut servir à enregistrer les transactions, de manière immédiate ou différée. Pour les cartes à puce, les terminaux de paiement peuvent en outre vérifier un code secret et inscrire dans la puce de la carte la transaction effectuée. Les terminaux peuvent aussi comptabiliser les différentes transactions effectuées pour établir un relevé des paiements effectués sur une période donnée.

Pour réaliser ces différentes fonctions, les terminaux de paiement comportent un processeur central couplé à une mémoire volatile et à une mémoire non volatile. Le terminal de paiement dispose de différentes interfaces homme-machine, tel que clavier, dispositif d'affichage, imprimante, un lecteur de carte incluant un lecteur de bande magnétique et/ou un lecteur de puce, et des moyens de communication aptes à communiquer avec un serveur bancaire. Classiquement, les moyens de communication sont constitués d'un modem branché à une ligne de téléphone dédiée au terminal de paiement pour des raisons de sécurité. Le terminal peut en outre comporter une partie mobile et une partie fixe, la partie mobile permettant plus de souplesse d'utilisation vis à vis des clients.

Dans un petit commerce ne disposant que d'un seul point d'encaissement, un seul terminal de paiement suffit. Pour des commerces de taille plus importante, il peut être nécessaire d'avoir plusieurs terminaux de paiement. La multiplication des terminaux de paiement entraîne la multiplication des lignes téléphoniques ou autres connexions pour assurer les liaisons entre plusieurs terminaux d'un même commerce et le serveur bancaire. Une solution pour éviter de multiplier les liaisons consiste à utiliser un dispositif dit concentrateur. Le concentrateur est par exemple un ordinateur relié à chaque terminal de paiement par une liaison individuelle. Le concentrateur effectue une centralisation de certaines opérations telle que l'interrogation du serveur bancaire, mais permet en plus la duplication des informations de transactions effectuées par chaque terminal. Cette duplication des informations de transactions effectuées permet de sécuriser le système en cas de panne de l'un des éléments mais permet de simplifier certaines opérations de comptabilité notamment pour extraire la totalité des transactions effectuées sur tous les terminaux en une seule opération.

L'utilisation d'un concentrateur permet théoriquement de réduire la complexité de chaque terminal. Ainsi, l'économie faite sur plusieurs terminaux permet d'amortir le coût du concentrateur, en outre une seule ligne téléphonique permet d'assurer les communications pour tous les terminaux qui y sont connectés. Cependant l'économie faite sur un terminal est relativement minime. Or, à l'heure actuelle, un terminal de paiement doit disposer d'une puissance de traitement suffisante pour réaliser des opérations de cryptage complexes, et l'économie se réduit essentiellement à une économie sur l'occupation de la mémoire du terminal et au remplacement d'un modem téléphonique par une interface de communication avec le concentrateur. Pour un faible nombre de terminaux, par exemple deux à quatre terminaux, il est plus économique d'avoir des terminaux indépendants connectés à plusieurs lignes téléphoniques qu'un système à concentrateur. Mais l'utilisation de plusieurs terminaux ne permet pas au commerçant de bénéficier d'une duplication et d'une centralisation des informations de transactions effectuées.

L'invention propose un système de terminaux de paiement qui bénéficie des avantages d'un système à concentrateur mais sans concentrateur. La solution proposée est particulièrement adaptée pour les petits commerces devant disposer d'un petit nombre de terminaux de paiement.

Plus particulièrement, l'invention est un système de paiement par carte bancaire comportant un réseau privé d'échange de données, au moins deux terminaux de paiement identiques et une passerelle de communication. Chaque terminal dispose en outre d'une interface de communication pour se connecter audit réseau. La passerelle de communication est connectée audit réseau privé et à une ligne de communication pour communiquer avec un serveur bancaire distant.

Préférentiellement, la passerelle de communication peut être un modem xDSL. Le réseau peut être un réseau de type Ethernet et/ou peut être un réseau sans fil.

Selon des particularités de réalisation, une mémoire de masse d'un terminal peut mémoriser des programmes de fonctionnement, des données représentatives de transactions effectuées par ledit terminal, et des données représentatives de transactions effectuées par un autre terminal. Chaque terminal peut comporter, parmi ses programmes, un programme pour interroger tous les autres terminaux afin d'effectuer des opérations centralisées sur l'ensemble des terminaux. Chaque terminal peut comporter un programme de gestion globale du système mais un seul terminal met en oeuvre ledit programme. Le programme de gestion globale peut comporter des instructions pour effectuer la mise à jour logicielle du terminal le mettant en oeuvre et pour mettre à jour les autres terminaux.

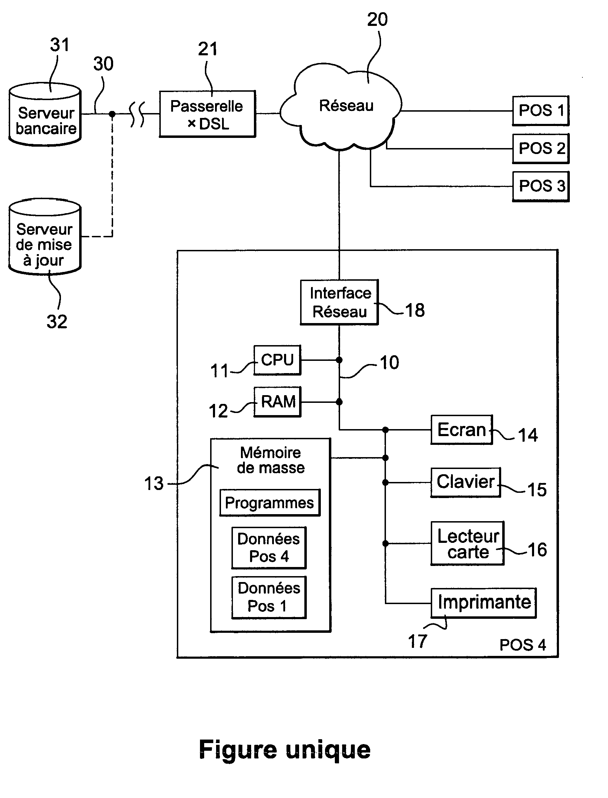

L'invention sera mieux comprise, et d'autres particularités et avantages apparaîtront à la lecture de la description qui va suivre, la description faisant référence à la figure unique qui représente un exemple de système de paiement par carte bancaire selon l'invention.

La figure unique représente un système de paiement par carte bancaire. A titre d'exemple, le système comporte quatre terminaux de paiement, ou POS (de l'anglais Point Of Sale), identiques et notés POS1, POS2, POS3 et POS4. Le système pourrait comporter un nombre différent de POS mais au moins deux POS sont nécessaire pour mettre en oeuvre l'invention. Il n'y a pas de nombre maximal de POS pour pouvoir utiliser l'invention.

Chaque POS est, par exemple, bâti autour d'un bus central 10 sur lequel sont connectés une unité centrale de traitement 11, une mémoire de travail 12, une mémoire de masse 13, un écran 14, un clavier 15, un lecteur de carte, une imprimante 17 et une interface réseau 18. A l'exception de l'interface réseau 18, les autres éléments constitutifs d'un POS sont les mêmes que ceux d'un POS de l'état de la technique. Toutefois, la mémoire de masse 13 doit avoir une taille légèrement supérieure à la taille d'un terminal conventionnel mais cette augmentation de taille n'a pas de répercussion de coût important.

Il est à noter que des variantes de constitution, connues de l'état de la technique, sont également possibles conjointement aux modifications effectuées selon l'invention. A titre d'exemple, un clavier et un écran supplémentaire peuvent être ajoutés et constitué une partie mobile détachable du POS pour être présentée à un client.

L'interface réseau 18 est une interface réseau d'un type connu, par exemple de type Ethernet avec liaison par câble coaxial ou paire torsadée. L'interface réseau 18 peut également être une interface de réseau sans fil, par exemple selon l'un des standards IEEE802.11. Ainsi, chaque POS du système est relié à un réseau 20 matérialisé par des câbles de connexion ou non matérialisé si ce réseau est un réseau sans fil. Le système de paiement comporte également une passerelle de communication 21 connectée d'une part au réseau 20, et d'autre par à une ligne de communication 30 qui permet de communiquer avec un serveur bancaire 31. La ligne de communication 30 est par exemple une ligne téléphonique. Selon un mode préféré de réalisation, la passerelle de communication est par exemple un modem de la famille xDSL muni d'une interface réseau, selon une configuration connue de l'état de la technique. La liaison avec le serveur bancaire 31 est alors assurée par l'intermédiaire de la ligne téléphonique 30 puis par Internet à l'aide d'une communication sécurisée d'un type connu.

L'utilisation du réseau 20 conjointement avec les terminaux POS1 à POS4 et la passerelle 21 permet à chaque POS de communiquer avec le serveur bancaire 31 de manière indépendante sur une même ligne de communication 30. En outre, l'utilisation du réseau 20 permet également aux POS d'échanger des données entre eux.

La mémoire de masse 13 peut être de différente nature, par exemple un disque dur ou une mémoire de type EEPROM ou Flash. La mémoire de masse 13 sert à mémoriser de manière non volatile les programmes de fonctionnement du POS mais également des données à sauvegarder telles que les transactions effectuées par le POS. L'utilisation d'une mémoire de masse dans chaque POS conjointement à l'utilisation du réseau 20 permet de mettre à disposition une pluralité de mémoires de masse indépendantes dans le système de paiement. Pour sécuriser la viabilité des données et notamment l'enregistrement des transactions effectuées, il est préféré de dupliquer la mémorisation des données relatives aux transactions effectuées dans un POS en les sauvegardant simultanément dans un autre POS du réseau. Ainsi, les données de transaction sont sauvegardées de manière redondante à deux endroits distincts.

Chaque POS comporte deux types de programmes de fonctionnement. Un premier type de programmes concerne le fonctionnement du POS en tant que terminal de paiement. Un deuxième type de programmes assure la gestion globale du système.

Les programmes du premier type sont de même nature que ceux d'un terminal de paiement à l'exception d'un module de connexion au serveur bancaire. Suivant les pays, le serveur bancaire 31 identifie chaque POS qui peut le contacter ou seulement le commerçant. Deux modes de réalisation peuvent être mis en oeuvre.

Selon un premier mode de réalisation chaque POS possède un identifiant qui lui est propre auprès du serveur bancaire 31. Chaque POS contacte le serveur bancaire par l'intermédiaire du réseau 20, de la passerelle 21 et de la ligne de communication 30. Chaque communication s'établie indépendamment des autres communications. Plusieurs communications peuvent être établies simultanément par différents POS.

Selon un deuxième mode de réalisation, le système comporte un identifiant global qui est commun pour tous les POS. II convient de s'assurer qu'un seul POS communique avec le serveur bancaire afin d'éviter des incohérences de traitement dans les autorisations de paiement. Une gestion des communications de type à jeton peut être réalisée par le POS maître. A titre d'exemple, lorsqu'un POS doit appeler le serveur bancaire 31, il envoie une requête au POS maître pour demander l'autorisation de communiquer avec le serveur bancaire 31. Si aucun autre POS du réseau n'est en train de communiquer avec le serveur bancaire, alors le POS est autorisé et peut établir la communication par l'intermédiaire de la passerelle 21. Le POS informe ensuite le POS maître lorsque la communication est terminée. Le POS maître ne donne l'autorisation de communiquer à un POS que si le dernier POS qui a eu une autorisation de communiquer l'a informé que la communication était terminée avec le serveur bancaire.

Le programme d'un terminal de paiement conventionnel peut en outre être modifié afin de sauvegarder les données d'une transaction dans le POS ainsi que dans un autre POS via le réseau 20.

Les programmes du deuxième type sont ajoutés spécifiquement pour la gestion globale du système. Tous les POS disposent de ces programmes, cependant, un seul POS les utilise dans le système, il s'agit du POS dit maître du système. Selon un mode de réalisation préféré, un POS interroge le réseau lors de son démarrage pour savoir s'il existe un POS maître sur le réseau. Si aucun POS maître ne répond, le POS se déclare maître et assure la supervision du réseau.

Le POS maître peut, par exemple, vérifier lors de sa mise en route si une mise à jour logicielle est nécessaire. A cet effet, il interroge un serveur de mise à jour 32 à travers le réseau 20, la passerelle 21 et la ligne de communication 30. La communication avec le serveur de mise à jour est effectuée de manière sécurisée. Le serveur de mise à jour 32 peut être distinct du, ou confondu avec le serveur bancaire 31.

Lors du démarrage d'un autre POS, le POS maître signale qu'un maître est déjà présent et peut effectuer des opérations propres à la gestion globale du système. Le POS maître peut interroger le POS qui entre sur le réseau afin de vérifier sa conformité logicielle et de le mettre à jour si nécessaire avant d'autoriser son fonctionnement dans le système. Egalement, le POS maître peut indiquer lors de chaque connexion ou déconnexion d'un POS dans le réseau quel POS assure la sauvegarde des informations de transaction d'un autre POS.

Lors de l'arrêt d'un POS maître, celui-ci peut désigner un autre POS comme maître. Le changement de maître peut également se faire sur requête d'un opérateur à partir d'un autre POS. En cas de panne du POS maître ou pour des raisons pratiques, il est alors possible de désigner un POS maître sans avoir à redémarrer l'ensemble du système.

Le POS maître peut également effectuer des opérations centralisées tel que, par exemple, des opérations sur les transactions effectuées par tous les POS du système. A cet effet, un opérateur lance une commande d'édition et le POS maître interroge tous les POS du système pour réunir les informations de transaction sur une période donnée. Les informations sur les transactions ainsi réunies peuvent être transmises au serveur bancaire, ou transmises à tout autre unité de stockage, ou encore imprimées pour être comptabilisées par le gérant du magasin où se trouve le système.

## Revendications

1. Système de paiement par carte bancaire **caractérisé en ce qu'**il comporte :
- un réseau privé d'échange de données (20),
- au moins deux terminaux de paiement identiques (POS1-POS4), chaque terminal disposant en outre d'une interface de communication (18) pour se connecter audit réseau (20),
- une passerelle de communication (21) connectée audit réseau privé (20) et à une ligne de communication (30) pour communiquer avec un serveur bancaire (31) distant.

2. Système selon la revendication 1, dans lequel la passerelle de communication (21) est un modem xDSL.

3. Système selon la revendication 1, dans lequel le réseau (20) est un réseau de type Ethernet.

4. Système selon la revendication 1, dans lequel le réseau (20) est un réseau sans fil.

5. Système selon la revendication 1, dans lequel chaque terminal comporte en outre :
- une unité centrale de traitement (11),
- une mémoire de travail (12),
- une mémoire de masse (13),
- au moins un écran (14),
- au moins un clavier (15),
- un lecteur de carte (16),
- une imprimante (17).

6. Système selon la revendication 5, dans lequel la mémoire de masse (13) mémorise des programmes de fonctionnement, des données représentatives de transactions effectuées par ledit terminal, et des données représentatives de transactions effectuées par un autre terminal.

7. Système selon la revendication 6, dans lequel chaque terminal (POS1-POS4) comporte parmi ses programmes un programme pour interroger tous les autres terminaux afin d'effectuer des opérations centralisées sur l'ensemble des terminaux.

8. Système selon la revendication 6, dans lequel chaque terminal (POS1-POS4) comporte un programme de gestion globale du système mais un seul terminal met en oeuvre ledit programme.

9. Système selon la revendication 8, dans lequel le programme de gestion globale comporte des instructions pour effectuer la mise à jour logicielle du terminal le mettant en oeuvre et pour mettre à jour les autres terminaux.
